# EUROPÄISCHE PATENTSCHRIFT

(11) **EP 2 823 078 B1**
(45) Veröffentlichungstag und Bekanntmachung des Hinweises auf die Patenterteilung: **30.05.2018**
(21) Anmeldenummer: 13709807.5
(22) Anmeldetag: 01.03.2013
(51) Int. Cl.: C22C 38/40, C22C 38/42, C22C 38/44, C22C 38/48, C22C 38/60, F16C 33/12, F16C 33/62, C22C 38/00, C22C 38/02, C22C 38/04, C22C 38/34, C22C 38/46, C22C 38/50, C22C 38/52

(54) **HITZEBESTÄNDIGER LAGERWERKSTOFF AUS EINER AUSTENITISCHEN EISENMATRIX-LEGIERUNG**
HEAT RESISTANT BEARING MATERIAL OF AUSTENITIC MATRIX
MATÉRIAU DE ROULEMENT RÉSISTANT À LA TEMPÉRATURE À MATRICE AUSTÉNITIQUE

(30) Priorität: 07.03.2012 DE 102012203569
(43) Veröffentlichungstag der Anmeldung: 14.01.2015
(73) Patentinhaber: Mahle International GmbH, 70376 Stuttgart (DE)
(72) Erfinder: STEINERT, Lutz, 79650 Schopfheim (DE); WINTRICH, Klaus, 79650 Schopfheim (DE)
(74) Vertreter: BRP Renaud & Partner mbB Rechtsanwälte Patentanwälte Steuerberater
(86) Internationale Anmeldenummer: PCT/EP2013/054130
(87) Internationale Veröffentlichungsnummer: WO 2013/131811

(56) Entgegenhaltungen:
- EP-A1- 1 352 983
- EP-A1- 1 741 799
- EP-A1- 2 029 786

## Beschreibung

Die Erfindung betrifft einen hitzebeständigen Lagerwerkstoff aus einer austenitischen Eisenmatrix-Legierung mit einem zur Erzielung einer Festschmierwirkung an seinen Lagerflächen ausreichenden Anteil an Schwefel mit (S) von 0,15 bis 0,5 Gew.-%, einem zu Erzielung einer Verschleißminderung an seinen Lagerflächen ausreichenden Anteil an Karbiden mit Kohlenstoff (C) von 0,8 bis 1,5 Gew.-% und einem Gesamtanteil von 1 bis 6 Gew.-% eines oder mehrerer der Legierungselemente Kobalt (Co), Niob (Nb), Rhenium (Re), Tantal (Ta), Vanadium (V), Wolfram (W), Hafnium (Hf), Yttrium (Y), Zirkonium (Zr) gemäß dem Oberbegriff des Anspruchs 1.

Leistungsfähige Werkstoffe, insbesondere Werkstoffe für Lagerelemente, wie sie beispielsweise in Turboladern oder in Abgasrückführsystemen zur Regulierung des Durchflusses in Verbrennungsmotoren verwendet werden, sind im Stand der Technik bekannt. Dabei werden verschiedene Konzepte verwendet, bei denen durch außen liegende pneumatische oder elektrische Aktuatoren mittels Stangenkinematik entsprechende Regelsysteme mechanisch verstellt werden.

Der Durchbruch in das Innere des Turboladers oder des Abgasrückführsystems ist in der Regel auch gleichzeitig die Lagerung der Verstellung. Die Lagerelemente stehen in direktem Kontakt mit dem Abgas, wodurch Temperaturen bis zu 950°C an den Lagerelementen erreicht werden. Neben der hohen Temperaturbelastung sind bei den Lagerelementen auch die Tribologie und die Korrosion als Randbedingungen von Bedeutung.

Bezüglich des tribologischen Verschleißverhaltens ist insbesondere die Eignung der Werkstoffkombination von Regelsystem (Welle) und Lagerwerkstoff von Bedeutung. So kann es zu verschiedenen Arten von Verschleiß, insbesondere zu adhäsivem oder abrasivem Verschleiß, zu tribochemischem Reaktionsverschleiß oder zur Materialermüdung kommen. Dabei ist auffällig, dass bei einigen Werkstoffkombinationen der Verschleiß mit steigender Temperatur abnimmt. Die sich bildenden Oxidschichten wirken als Trennschichten und verhindern so den metallischen Kontakt zwischen den tribologischen Partnern, was insbesondere den adhäsiven Verschleiß verringert. Weiterhin sind Lagerelemente in Turboladern und Abgasrückführsystemen je nach Einbau im Motorraum unterschiedlich starken Umwelteinflüssen ausgesetzt. Dabei spielen korrosive Phänomene eine wichtige Rolle. Speziell von der Fahrbahn stammendes Spritzwasser, in dem im Winter oft noch Rückstände von Streusalz vorhanden sind, kann zu einer Schädigung der Oberflächen führen. Zusätzlich zu diesen umwelt- und umgebungsbedingten Korrosionen sind in der letzten Zeit immer häufiger Korrosionen durch Abgaskondensate zu erkennen. Insbesondere die Verwendung von Abgasrückführungen führt dazu, dass es zunehmend zu Korrosionen durch Abgaskondensate kommt. Nach dem Stoppen des Motors kommt es lokal zu Kondensationen und durch die in der Atmosphäre vorhanden Stick- und Schwefeloxide und Chloride zur Bildung von Salpeter-, Schwefel- und Salzsäure.

Aus der WO 2007/147710 A1 (EP 2 029 786 A1) ist ein hitzebeständiger Lagerwerkstoff bekannt der sich aus einer austenitischen Eisenmatrix-Legierung mit einem, zur Erzielung einer Festschmierwirkung an seinen Lagerflächen ausreichenden Schwefelanteil und mit einem Anteil von 1 bis 6 Gew.-% eines oder mehrerer der Legierungselemente Wolfram (W), Kobalt (Co), Niob (Nb), Rhenium (Re), Molybdän (Mo), Tantal (Ta), Vanadium (V), Hafnium (Hf), Yttrium (Y), Zirkonium (Zr) und/oder vergleichbar hochschmelzenden Legierungselementen zusammensetzt. Durch die hohe Schmierwirkung der Sulfide in Kombination mit der austenitischen Matrix und der hohen Kriech-, Korrosions- und Oxidationsbeständigkeit wird dieser Werkstoff als Lagerwerkstoff in Turboladern in Kombination mit Ottomotoren in vorteilhafterweise eingesetzt. Nachteilig an diesem Lagerwerkstoff ist, dass er für einen Einsatz bei hohen Temperaturen, bevorzugt bei Temperaturen oberhalb von 600°C, und besonders bevorzugt bei Temperaturen oberhalb von 850°C funktionssicher ausgebildet ist. Das heißt bei diesem Werkstoff stehen insbesondere die Eigenschaften im Hochtemperaturbereich im Vordergrund. In einem Temperaturbereich unterhalb von 400°C zeigen derartige Lagerwerkstoffe dagegen einen erhöhten Verschleiß.

Aufgabe der vorliegenden Erfindung ist es einen Lagerwerkstoff, insbesondere für Turbolader oder Abgasrückführsysteme bereitzustellen, der im Hochtemperaturbereich, das heißt bis 950°C, aber auch in einem Temperaturbereich unterhalb von 400°C, die geforderten Eigenschaften, insbesondere einen geringen Verschleiß aufweist.

Gelöst wird die Aufgabe von einem hitzebeständigen Lagerwerkstoff aus einer austenitischen Eisenmatrix-Legierung mit einem zur Erzielung einer Festschmierwirkung an seinen Lagerflächen ausreichenden Anteil an Schwefel mit (S) von 0,15 bis 0,5 Gew.-%, einem zur Erzielung einer Verschleißminderung an seinen Lagerflächen ausreichenden Anteil an Karbiden mit Kohlenstoff (C) von 0,8 bis 1,5 Gew.-% und einem Gesamtanteil von 1 bis 6 Gew.-% eines oder mehrerer der Legierungselemente Kobalt (Co), Niob(Nb), Rhenium (Re), Tantal (Ta), Vanadium (V), Wolfram (W), Hafnium (Hf), Yttrium (Y), Zirkonium (Zr), der gekennzeichnet ist, durch folgende weitere Legierungselemente jeweils in Gew.-%: Chrom (Cr) = 20 - 32; Mangan (Mn) = 0 - 1,0; Silizium (Si) = 1,5 - 3,5; Nickel (Ni) = 12 - 25; Molybdän (Mo) = 0,5 - 5,5; Niobium (Nb) = 0 -3,5; Wolfram (W) = 1,0 - 6,5; Kupfer (Cu) = 0 - 3,5; Stickstoff (N) = 0 - 0,8 und Eisen (Fe) als Rest inklusive unvermeidbarer Verunreinigungen.

In überraschender Weise vereinigt der erfindungsgemäße Lagerwerkstoff die geforderten Eigenschaften, nämlich, dass dieser Werkstoff sowohl im Hochtemperaturbereich bei Temperaturen oberhalb von 850°C als auch im unteren Temperaturbereich, d.h. bei Temperaturen < 400°C, gegen verschiedene Gegenläufermaterialien nur einen geringen Verschleiß zeigt. Bei den bisher eingesetzten Lagerwerkstoffen stand insbesondere der Hochtemperaturbereich im Fokus der Entwicklung, so dass es im unteren Temperaturbereich zu erhöhtem Verschleiß kommen konnte.

Die Erfindung beruht auf dem allgemeinen Gedanken, einen Anteil an Schwefel in einer Größe vorzusehen, durch den sich für eine Schmierwirkung notwendige Sulfide innerhalb der Legierung ausbilden können, und einen Anteil an Kohlenstoff in einer Größe vorzusehen, durch den sich für eine Verschleißminderung notwendige Karbide innerhalb der Legierung ausbilden können. Kohlenstoff als Legierungsbestandteil scheidet sich als feine Kohlenstoffteilchen unter Verbesserung der Feststoffschmiereigenschaften aus oder es wirkt als Hilfsstoff zur Bildung von Karbiden oder intermetallischen Verbindung zwischen Eisen und einem Legierungselement unter Verbesserung der Verschleißfestigkeit in einer Eisenmatrix.

Durch die erfindungsgemäße Kombination einer austenitischen Matrix mit sulfidischen Festschmierstoffen und einer verschleißfesten, durch Karbide ausgebildeten Phase, ist es gelungen, die Verschleißfestigkeit im unteren Temperaturbereich signifikant zu verbessern, ohne gleichzeitig die guten Verschleiß- und Kriecheigenschaften im oberen Temperatursegment zu verlieren.

Die Zugabe von Kohlenstoff führt zu einer Ausbildung von Karbiden, die dann als eine Art Hartphase im unteren Temperaturbereich den Verschleiß verringern, wie dies beispielsweise bei Ventilsitzringen im Temperaturbereich bis ca. 450°C üblich ist. Allgemein führt aber eine solche Zugabe von Kohlenstoff auch zu einer deutlichen Verschlechterung der Hochtemperatureigenschaften bezüglich Festigkeit und Kriechbeständigkeit. So hat beispielsweise bei den im Stahlschlüssel als "Hitzebeständige Stähle (12a)" eingruppierten Werkstoffen keiner einen Kohlenstoffanteil, der größer als 0,2 Gew.-% ist. Damit ist eine solche Zugabe von Kohlenstoff zu Legierungen, die im Hochtemperaturbereich verwendet werden, dem allgemeinen Fachwissen entgegengerichtet und daher ein überraschendes, von einem Fachmann nicht zu erwartendes Ergebnis.

In einer bevorzugten Ausführungsform beträgt der Anteil an Schwefel zumindest 0,2 Gew.-% und der Anteil an Kohlenstoff zumindest 0,8 Gew.-% und höchstens 2,0 Gew.-%. In vorteilhafterweise werden nämlich ab einem Kohlenstoffanteil von 0,8 Gew.-% die bevorzugten Karbide in einer Eisenmatrix gebildet, wodurch sich Feststoffschmiereigenschaften, Verschleißfestigkeit und mechanische Festigkeit verbessern.
Im Gegensatz dazu erfolgt, wenn der Kohlenstoffgehalt 2,0 Gew.-% übersteigt, eine Zunahme des Martensitgefüges, die Bildung einer übermäßigen Menge an hartem und sprödem Zementit (Fe₃C) und eine übermäßige Bildung der Menge an Karbiden, die zwischen dem Kohlenstoff und einem anderen Legierungsbestandteil gebildet werden, wodurch die Eisenmatrix spröde wird.

## Patentansprüche

1. Hitzebeständiger Lagerwerkstoff aus einer austenitischen Eisenmatrix-Legierung mit einem zur Erzielung einer Festschmierwirkung an seinen Lagerflächen ausreichenden Anteil an Schwefel mit (S) von 0,15 bis 0,5 Gew.-%, einem zur Erzielung einer Verschleißminderung an seinen Lagerflächen ausreichenden Anteil an Karbiden mit Kohlenstoff (C) von 0,8 bis 1,5 Gew.-% und einem Gesamtanteil von 1 bis 6 Gew.-% eines oder mehrerer der Legierungselemente Kobalt (Co), Niob (Nb), Rhenium (Re), Tantal (Ta), Vanadium (V), Wolfram (W), Hafnium (Hf), Yttrium (Y), Zirkonium (Zr),
**gekennzeichnet durch**
folgende weitere Legierungselemente jeweils in Gew.-%: Chrom (Cr) = 20 - 32; Mangan (Mn) = 0 - 1,0; Silizium (Si) = 1,5 - 3,5; Nickel (Ni) = 12 - 25; Molybdän (Mo) = 0,5 - 5,5; Niobium (Nb) = 0 -3,5; Wolfram (W) = 1,0 - 6,5; Kupfer (Cu) = 0 - 3,5; Stickstoff (N) = 0 - 0,8 und Eisen (Fe) als Rest inklusive unvermeidbarer Verunreinigungen.

2. Lagerwerkstoff nach Anspruch 1 **gekennzeichnet durch** Legierungselemente jeweils in Gew.-%: Kohlenstoff (C) = 0,9 - 1,4; Chrom (Cr) = 21 - 28; Mangan (Mn) = 0,1 - 1,0; Silizium (Si) = 2,0 - 3,5; Nickel (Ni) = 14 - 23; Molybdän (Mo) = 1,5 - 3,5; Niobium (Nb) = 1,0 -3,0; Wolfram (W) = 2,0 - 3,5; Schwefel (S) = 0,15 - 0,5; Kupfer (Cu) = 1,0 - 3,5; Stickstoff (N) = 0,1 - 0,8 und Eisen (Fe) als Rest inklusive unvermeidbarer Verunreinigungen.

3. Verwendung eines Lagerwerkstoffs nach Anspruch 1 oder 2, in einem Turbolader oder einem Abgasrückführsystem zur Regulierung des Durchflusses in einem Verbrennungsmotor.

4. Lagerelement für einen Turbolader oder ein Abgasrückführsystem zur Regulierung des Durchflusses in einem Verbrennungsmotor aus einem Lagerwerkstoff nach Anspruch 1 oder 2.

## Claims

1. Heat-resistant bearing material consisting of an austenitic iron matrix alloy having a proportion of sulphur (S) of 0.15 to 0.5 wt % that is sufficient to achieve a solid lubricating effect on the bearing surfaces of the heat-resistant bearing material, a proportion of carbides with carbon (C) of 0.8 to 1.5 wt % that is sufficient to achieve a reduction in wear on the bearing surfaces of the heat-resistant bearing material, and an overall proportion of 1 to 6 wt % of one or more of the alloying elements cobalt (Co), niobium (Nb), rhenium (Re), tantalum (Ta), vanadium (V), tungsten (W), hafnium (Hf), yttrium (Y), zirconium (Zr),
**characterised by**
the following further alloying elements in wt % in each case: chromium (Cr) = 20 - 32; manganese (Mn) = 0 - 1.0; silicon (Si) = 1.5 - 3.5; nickel (Ni) = 12 - 25; molybdenum (Mo) = 0,5 - 5.5; niobium (Nb) = 0 - 3.5; tungsten (W) = 1.0 - 6.5; copper (Cu) = 0 - 3.5; nitrogen (N) = 0 - 0.8 and iron (Fe) as the remainder including unavoidable impurities.

2. Bearing material according to claim 1, **characterised by** alloying elements in wt % in each case: carbon (C) = 0.9 - 1.4; chromium (Cr) = 21 - 28; manganese (Mn) = 0.1 - 1.0; silicon (Si) = 2.0 - 3.5; nickel (Ni) = 14 - 23; molybdenum (Mo) = 1.5 - 3.5; niobium (Nb) = 1.0 - 3.0; tungsten (W) = 2.0 - 3.5; sulphur (S) = 0.15 - 0.5; copper (Cu) = 1.0 - 3.5; nitrogen (N) = 0.1 - 0.8 and iron (Fe) as the remainder including unavoidable impurities.

3. Bearing material according to claim 1 or 2, in a turbocharger or exhaust gas recirculation system for regulating flow in an internal combustion engine.

4. Bearing element for a turbocharger or an exhaust gas recirculation system for regulating flow in an internal combustion engine, said bearing element consisting of a bearing material according to claim 1 or 2.

## Revendications

1. Matériau pour palier résistant à la chaleur, en un alliage à matrice de fer austénitique avec une proportion de soufre suffisante pour obtenir une action de lubrifiant solide au niveau de ses surfaces de palier avec (S) de 0,15 à 0,5 % en poids, avec une proportion de carbures suffisante pour obtenir une réduction d'usure au niveau de ses surfaces de palier avec carbone (C) de 0,8 à 1,5 % en poids et avec une proportion totale de 1 à 6 % en poids d'un ou plusieurs des éléments d'alliage suivants : cobalt (Co), niobium (Nb), rhénium (Re), tantale (Ta), vanadium (V), tungstène (W), hafnium (Hf), Yttrium (Y), zirconium (Zr),
**caractérisé par** les autres éléments d'alliage suivants, exprimés à chaque fois en pourcentage pondéral : chrome (Cr) = 20 - 32 ; manganèse (Mn) = 0 - 1,0 ; silicium (Si) = 1,5 - 3,5 ; nickel (Ni) = 12 - 25; molybdène (Mo) = 0,5 - 5,5; niobium (Nb) = 0 - 3,5; tungstène (W) = 1,0 - 6,5 ; cuivre (Cu) = 0 - 3,5 ; azote (N) = 0 - 0,8 et fer (Fe) pour le reste, y compris les inévitables impuretés.

2. Matériau pour palier selon la revendication 1, **caractérisé par** les éléments d'alliage suivants, exprimés à chaque fois en pourcentage pondéral: carbone (C) = 0,9 - 1,4; chrome (Cr) = 21 - 28 ; manganèse (Mn) = 0,1 - 1,0 ; silicium (Si) = 2,0 - 3,5 ; nickel (Ni) = 14 - 23 ; molybdène (Mo) = 1,5 - 3,5 ; niobium (Nb) = 1,0 - 3,0 ; tungstène (W) = 2,0 - 3,5 ; soufre (S) = 0,15 - 0,5 ; cuivre (Cu) = 1,0 - 3,5 ; azote (N) = 0,1- 0,8 et fer (Fe) pour le reste, y compris les inévitables impuretés.

3. Utilisation d'un matériau pour palier selon la revendication 1 ou 2, dans un turbocompresseur ou dans un système de recyclage de gaz d'échappement en vue de la régulation du débit dans un moteur à combustion interne.

4. Élément de palier, destiné à un turbocompresseur ou à un système de recyclage de gaz d'échappement en vue de la régulation du débit dans un moteur à combustion interne, en un matériau pour palier selon la revendication 1 ou 2.
